# FASCICULE DE BREVET EUROPEEN

(11) **EP 2 182 191 B1**
(45) Date de publication et mention de la délivrance du brevet: **19.10.2011**
(21) Numéro de dépôt: 09173504.3
(22) Date de dépôt: 20.10.2009
(51) Int. Cl.: F01N 11/00

(54) **Procédé de surveillance d'un filtre à particules**
Verfahren zur Überwachung eines Partikelfilters
Method for monitoring a particle filter

(30) Priorité: 04.11.2008 FR 0857490
(43) Date de publication de la demande: 05.05.2010
(73) Titulaire: Peugeot Citroën Automobiles SA, 78140 Vélizy-Villacoublay (FR)
(72) Inventeur: Singer, Arnold, 92400 Courbevoie (FR); Chaillou, Christophe, 78180 Montigny-le-Bretonneux (FR)

(56) Documents cités:
- FR-A- 2 814 498
- FR-A- 2 879 245
- US-A1- 2008 041 035

## Description

L'invention a trait au domaine de la dépollution des moteurs à combustion, et plus particulièrement au contrôle des filtres à particules pouvant équiper la ligne d'échappement des moteurs, afin de piéger les particules issues de la combustion dans le moteur.

Un moteur à combustion interne produit lors de son fonctionnement des gaz d'échappement issus de la combustion du carburant, et contenant un certain nombre de polluants réglementés. Les polluants issus de la combustion d'un moteur peuvent notamment comprendre des particules solides carbonées. A défaut de pouvoir calibrer le moteur afin qu'il ne rejette qu'une quantité de polluants réglementés admissible, les gaz d'échappement doivent subir un traitement afin de réduire ces polluants à un niveau inférieur aux seuils normalisés.

Le moyen de traitement des gaz est généralement situé dans le circuit d'échappement du moteur. On parle alors de post-traitement des gaz. Ce moyen de traitement peut être constitué d'un ou plusieurs éléments, et peut notamment comporter un filtre à particules.

Un filtre à particules automobile permet d'éliminer par filtration les particules solides présentes dans les gaz d'échappement des moteurs, généralement Diesel. Une fois piégées au sein du filtre, les particules doivent être éliminées périodiquement par élévation de la température de 450 jusqu'à 700°C au sein du filtre afin d'entraîner leur combustion. Cette opération est couramment appelée « régénération » du filtre à particules. Classiquement, l'énergie nécessaire à la régénération est fournie par une élévation pilotée de la température des gaz d'échappement.

Classiquement le surplus d'énergie à l'échappement nécessaire, pendant les phases de régénération, à l'élévation de température par rapport au fonctionnement normal du moteur est fourni par l'utilisation de post-injections, c'est-à-dire d'injections de carburant tardives, après le point mort haut du cycle, ou par une dégradation du rendement de la combustion, ou encore par une injection de carburant directement dans la ligne d'échappement.

Dans le cas de l'utilisation d'une post-injection celle-ci peut brûler totalement ou partiellement dans le moteur, générant une élévation de la température des gaz d'échappement ou, si elle est suffisamment tardive, entraîner une augmentation des quantités de CO et d'HC à l'échappement qui s'oxydent en arrivant sur le catalyseur d'oxydation afin de générer de la chaleur. C'est ce dernier phénomène qui est également mis en jeu si l'on effectue une introduction directe de carburant sous forme pulvérisé ou de vapeur dans la ligne d'échappement du moteur.

Cependant, les particules charbonnées piégées par le filtre sont des matières combustibles, et leur combustion peut s'entretenir d'elle-même au-delà d'une température d'environ 450°C si le filtre met en jeu un additif d'aide à la régénération, ou 600°Csinon, et dès lors que du comburant est disponible en quantité suffisante.

De l'oxygène étant généralement présent dans les gaz d'échappement des moteurs, la combustion des particules de suies peut ainsi s'emballer en cas de charge importante du filtre à particules en suies, menant à un dégagement important d'énergie dans le filtre, pouvant provoquer son endommagement (par exemple sa fissuration) ou sa destruction.

D'une manière générale, les suies contenues dans le filtre à particules génèrent en s'oxydant un exotherme qui peut être important, notamment dans le cas ou le filtre à particules est fortement chargé en suies et que le débit des gaz d'échappement est faible.

Une charge en suie importante du filtre peut être notamment observée lorsque le véhicule automobile muni du filtre effectue majoritairement des roulages dits urbains, c'est-à-dire à faible vitesse et avec des arrêts fréquents. Dans ces conditions, il est extrêmement difficile de régénérer un filtre à particules, car les gaz d'échappement sont très loin de la température de régénération du filtre, ou n'atteignent une température suffisante pour déclencher une régénération que lors d'intervalles temporels trop courts pour finaliser cette régénération. Typiquement, rappelons que la température des gaz d'échappement d'un moteur automobile Diesel suralimenté par un turbocompresseur, et mesurée en sortie du turbine du turbocompresseur, est de l'ordre de 150°C et qu'il faut au minimum environ 450°C pour entamer une régénération d'un filtre additivé.

Par ailleurs, si, consécutivement à un chargement en suies extrême du filtre à particules, le moteur est soumis à un roulage prolongé sous forte charge, la température des gaz d'échappement peut déclencher spontanément la combustion ou l'oxydation des suies dans le filtre. Par ailleurs, dans certaines circonstances une combustion des suies débutée avant l'arrêt du moteur peut se poursuivre après son arrêt, voire s'initier peu après cet arrêt si le circuit d'échappement est particulièrement chaud et le filtre n'est plus refroidi par le flux des gaz d'échappement. Cependant, sa durée sera limitée, la combustion étant étouffée en l'absence de circulation de gaz, car il n'y a plus d'apport d'oxygène.

Ces combustions de suies incontrôlées peuvent endommager le filtre, si elles se produisent à une température importante ou si elles entrainent une élévation trop rapide de la température dans le filtre. Un tel endommagement est préjudiciable à plus d'un titre. D'une part, l'efficacité du système de post-traitement est remise en cause, et d'autre part, selon les réglementations actuelles et à venir en matière de diagnostique embarqué (fonction « OBD »), il est nécessaire de garantir l'efficacité des systèmes de post-traitement pendant une durée d'utilisation (typiquement 160 000 km selon les normes EURO 5) ou de pouvoir alerter le conducteur d'un véhicule en cas de défaillance du système de post-traitement.

Le brevet FR2814498 de Renault SA présente un moyen de diagnostiquer la défaillance d'un filtre à particules ou de calculer sa charge par observation de l'énergie dégagée lors d'une régénération du filtre. Ce brevet détecte un endommagement du filtre à particules par rapport à une énergie de combustion. Or, l'inventeur a constaté que les endommagements du filtre à particules, et notamment les fissurations, sont dus à un fort gradient thermique et non à une énergie thermique. S'il est donc connu de contrôler par diverses stratégies les régénérations d'un filtre à particules, il n'est pas connu dans l'art antérieur de procédé visant à contrôler l'occurrence de ce type de combustions spontanées des particules dans le filtre, ainsi que les défaillances du filtre qu'elles peuvent engendrer, en se basant sur une évaluation du gradient thermique dans le filtre à particules.

En outre, l'effet de ce type de combustion incontrôlée des particules sur la charge en suies du filtre n'est actuellement pas pris en compte dans les modèles de détermination de cette charge.

L'objet du présent brevet est de proposer un procédé de reconnaissance d'une combustion (ou oxydation), et notamment d'une combustion incontrôlée, dans un filtre à particules équipant la ligne d'échappement d'un moteur à combustion.

Plus précisément, l'invention porte sur un procédé de surveillance d'un filtre à particules équipant une ligne d'échappement d'un moteur à combustion selon la revendication 1.

Cette surveillance et la caractérisation de la combustion détectée par l'exotherme généré dans le filtre à particules permet par exemple de diagnostiquer une défaillance du filtre ou de prendre en compte l'effet de cette combustion sur la charge en suies du filtre, et ce pendant toute la phase de fonctionnement du moteur. L'invention permet un contrôle du filtre pendant toutes ses phases d'utilisation, et non pas uniquement lors de ses régénérations commandées. En outre, l'invention se base sur une évaluation précise de l'exotherme généré par l'oxydation des suies dans le filtre à particules.

Selon l'invention, ce procédé est appliqué à un filtre dont la régénération périodique est commandée par des moyens appropriés, et est mis en oeuvre pendant toute la phase de fonctionnement du moteur, et notamment hors des phases de régénérations commandées du filtre. Ainsi, l'oxydation des suies qui peut se produire lors d'un roulage à forte charge mais en dehors des phases de régénérations pilotées par le contrôle moteur peut-elle être prise en compte, pour sa surveillance et son évaluation.

De préférence, il est en outre mis en oeuvre pendant une durée prédéterminée suite à l'arrêt du moteur à combustion. Si une combustion incontrôlée des suies se produit juste avant l'arrêt du moteur, elle sera néanmoins prise en compte par le procédé selon l'invention.

De préférence, les caractéristiques physiques du filtre considérées comportent au moins l'un des paramètres suivants : le volume du filtre, sa forme, son inertie thermique, son matériau constitutif, le coefficient d'échange thermique entre le filtre et son environnement. Ces caractéristiques non limitatives vont notamment permettre de caractériser les échanges thermiques du filtre avec son environnement, ainsi que permettre de caractériser la latence existant dans la montée ou la descente en température des gaz d'échappement entre l'entrée et la sortie du filtre.

De préférence, dans le modèle d'évaluation de la température théorique en sortie du filtre :
- on mesure ou on estime la température en entrée du filtre,
- on mesure ou on estime le débit des gaz d'échappement,
- on évalue le retard d'évolution de la température entre l'entrée et la sortie du filtre lié au temps de transport des gaz, en tenant compte du débit des gaz d'échappement,
- on calcule la température du filtre à particules (et plus particulièrement de son du substrat) en tenant compte des caractéristiques physiques du filtre, et de leurs effets sur les échanges thermique par convection avec les gaz d'échappement et avec l'air extérieur,
- on calcule une température théorique en sortie du filtre en l'absence de combustion dans le filtre d'échappement à partir de la température mesurée ou estimée des gaz en entrée du filtre à particules, des échanges thermiques par convection du filtre avec les gaz d'échappement et avec l'air extérieur, et du retard estimé à partir du débit des gaz d'échappement.
Le modèle employé pour l'évaluation de la température de sortie peut donc être relativement simple, et réalisable en se basant sur des données et grandeurs facilement évaluables.

Dans une variante où l'on utilise un modèle de calcul pour déterminer la charge en suies présente dans le filtre à particules, on détermine la quantité de suies oxydée dans le filtre grâce à l'exotherme évalué, et on corrige la charge en suies présente dans le filtre en y soustrayant la quantité de suies oxydée. Ainsi, le modèle développé peut se greffer à un modèle d'évaluation de la charge en suies d'un filtre à particules pour en améliorer la précision.

De préférence, on conclut à une défaillance du filtre à particules si l'exotherme dans le filtre à particule dépasse un niveau prédéterminé. En effet, l'inventeur à constaté qu'un exotherme trop important est une cause de défaillance d'un filtre à particules.

Dans une variante de l'invention, le niveau prédéterminé de l'exotherme est compris entre 100°C et 200°C, et de préférence entre 140°C et 160°C. Le niveau critique de l'exotherme entrainant une défaillance d'un filtre à particule est assez variable selon le filtre considéré, sa taille, sa forme, sa constitution. Cependant, pour un filtre couramment utilisé dans l'industrie automobile, un exotherme de 150°C environ porte généralement préjudice à son intégrité.

De préférence, on intègre l'exotherme dans le filtre à particule sur une période glissante prédéfinie, et on conclut à une défaillance du filtre à particules si l'intégrale de l'exotherme dépasse une valeur prédéterminée. Si un exotherme ponctuellement trop important peut détruire ou endommager un filtre à particules, l'inventeur a constaté qu'un exotherme plus modéré mais se produisant sur une période plus longue peut également être la cause d'une défaillance du filtre. L'intégrale de l'exotherme sur une période glissante permet de juger de ce phénomène.

Dans une variante de l'invention dans laquelle le procédé est appliqué à un véhicule à moteur à combustion, comportant un filtre à particules dans la ligne d'échappement de son moteur, et comportant en outre un module « on board diagnostic » (OBD), on consigne dans ledit module une information de défaillance du filtre à particules si on détecte une défaillance du filtre à particules. Ceci peut notamment permettre de répondre à des contraintes réglementaires de consignation des défaillances d'un véhicule.

Dans une variante de l'invention dans laquelle le procédé est appliqué à un véhicule comportant en outre un dispositif d'alerte lumineux d'anomalie du filtre à particule, **caractérisée en ce qu**'on commande ledit dispositif lumineux si on détecte une défaillance du filtre à particules. L'utilisateur ainsi averti pourra faire réparer son véhicule dans les plus brefs délais.

L'invention est décrite plus en détail ci-après et en référence aux figures représentant schématiquement un dispositif permettant la mise en oeuvre du procédé et selon un mode de réalisation préférentiel, et une représentation graphique des températures observées et calculées dans un cycle de roulage, dans le cadre d'un procédé selon l'invention.

La figure 1 représente schématiquement l'ensemble constitué par un moteur à combustion et sa boucle d'air principale, c'est-à-dire son circuit d'admission et d'échappement, ainsi que les moyens de post-traitement des gaz d'échappement, et les dispositifs nécessaires à la mise en oeuvre de la stratégie de diagnostic du filtre à particules selon le mode de réalisation préférentiel de l'invention.

La figure 2 présente sur un graphique les températures observées et calculées dans un cycle de roulage, dans le cadre d'un procédé selon l'invention.

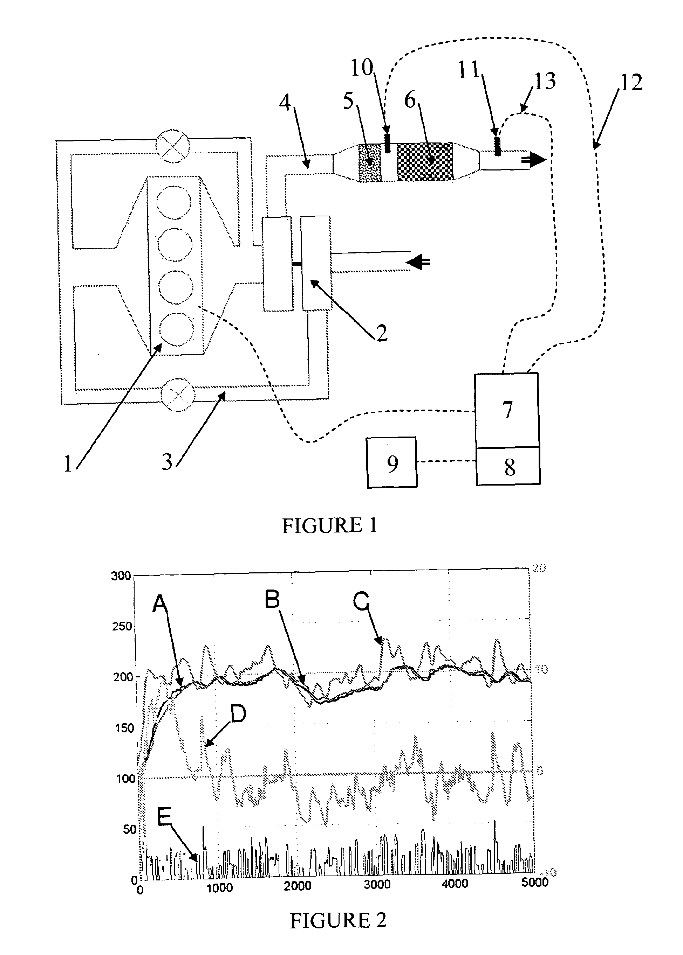

Sur la figure 1, un moteur 1 de type Diesel est suralimenté à l'aide d'un turbocompresseur 2. L'admission de l'air dans le moteur est réalisée via un conduit d'admission 3. L'échappement des gaz après combustion est réalisé par un conduit d'échappement 4.

Dans l'exemple ici représenté, le post-traitement des gaz d'échappement met en jeu un catalyseur d'oxydation 5 et un filtre à particules 6.

Un calculateur moteur 7 (ici représenté comme un ensemble, mais pouvant être constitué de plusieurs éléments ou divisé en de multiples cartes ou boîtier électroniques) pilote les diverses lois de commande du moteur, les stratégies d'injection de carburant, ainsi que le pilotage des moyens de post-traitement, et notamment le suivi du remplissage du filtre à particules. Le calculateur 7 intègre également les moyens de commandes appropriés pour commander la régénération périodique du filtre à particules 6. Le calculateur moteur 7 comporte également une fonction OBD (On Board Diagnostic) 8 qui répertorie et enregistre les principales défaillances ou anomalies de fonctionnement du moteur et de ses périphériques, et peut par exemple déclencher une alerte en cas de dysfonctionnement, sous la forme d'un dispositif lumineux 9 d'alerte de l'opérateur du moteur ou du conducteur du véhicule ainsi équipé.

Dans le mode de réalisation préférentiel ici représenté, une sonde de température 10 est positionnée dans le conduit d'échappement 4 entre le catalyseur d'oxydation 5 et le filtre à particules 6, à l'entrée du filtre à particules 6, et permet la mesure de la température en entrée du filtre à particules. Une sonde de température 11 est positionnée dans le conduit d'échappement 4 en sortie du filtre à particules 6, et permet la mesure de la température en sortie du filtre à particules.

Notons que la sonde de température 10 à l'entrée du filtre peut-être remplacée par un modèle numérique d'estimation de la température en amont du filtre à particules, stocké dans le calculateur moteur. Cette variante présente un intérêt économique certain, au prix d'une moindre précision, qui reste cependant compatible d'un usage automobile classique.

La sonde de température 10 en entrée du filtre 6 et la sonde de température 11 en sortie du filtre 6 communiquent avec le calculateur moteur 7, par exemple par l'intermédiaires de bus 12 et 13, calculateur qui intègre en outre le procédé proposé.

Dans le procédé développé, on calcule une température théorique en sortie du filtre à particules en fonction de la température mesurée (ou éventuellement estimée) en entrée du filtre à particules 6 et d'un ensemble de paramètre tels que le volume du filtre 6, et/ou son inertie thermique, et/ou le coefficient d'échange thermique entre le filtre 6 et son environnement. Dans ce calcul, on ne tient évidemment pas compte de l'éventuelle combustion des particules dans le filtre.

Le calcul de la température théorique en sortie du filtre 6 est préférentiellement effectué en continu, pendant tout le temps de fonctionnement du moteur 1, voire même pendant une certaine durée successive à l'arrêt du moteur 1. Faire ce calcul en continu est notamment avantageux du fait du décalage temporel existant entre l'évolution de la température en amont et en aval du filtre 6, du fait notamment de son inertie thermique et du temps de transport des gaz d'échappement à travers le filtre 6. De préférence ce calcul n'est pas effectué uniquement lors des régénérations du filtre 6 déclenchées par le contrôle moteur 7.

Le modèle de température adopté peut être basé sur les informations liées à la forme, à la taille, au matériau et à l'enveloppe du filtre à particules ainsi qu'aux données issues du contrôle moteur suivantes : température amont du filtre à particules à la sonde, température ambiante, débit des gaz d'échappement et richesse des gaz d'échappement. Tout d'abord, on effectue un calcul de la température du substrat du filtre à particules en tenant compte de la convection avec les gaz d'échappement et de la convection avec l'air extérieur. On calcule la température des gaz d'échappement en sortie du filtre à particules à partir de la température des gaz en entrée du filtre à particules, de la convection avec le substrat du filtre à particules et d'un retard calculé à partir du débit des gaz d'échappement. Une fonction de recentrage de l'erreur est rajoutée pour recaler le modèle sur la température mesurée en aval du filtre à particules. Le calcul de cette fonction se fait préférentiellement sur une période de plusieurs heures et n'est pas autorisé pendant une régénération, ainsi que les 30 minutes qui suivent la régénération, ni lorsque le moteur est à l'arrêt.

La figure 2 montre une représentation graphique d'un exemple des températures observées et calculées dans le cadre d'un procédé selon l'invention, lorsqu'il est appliqué à un véhicule automobile particulier parcourant un cycle urbain donné. En abscisse est porté le temps en seconde s'écoulant lors du cycle de roulage parcouru. En ordonnée sont présentées deux échelles de température, l'échelle de gauche s'applique aux courbes A, B et C, l'échelle de droite s'applique à la courbe D. La courbe E représente la vitesse du véhicule dans le cycle (sans échelle se rattachant à cette courbe). La courbe A représente la température mesurée en sortie du filtre à particules. La courbe B représente la température théorique calculée en sortie du filtre, en l'absence de combustion ou d'oxydation de suies dans le filtre, et selon le modèle développé. La courbe C représente la température mesurée ou évaluée en entrée du filtre à particules. La courbe D représente l'écart entre la température mesurée en sortie du filtre et la température théorique calculée en sortie du filtre.

L'exotherme généré par l'oxydation des suies est évalué en calculant la différence entre la température mesurée en sortie du filtre à particules et la température théorique calculée pour ce même point.

Si l'exotherme généré par l'oxydation des suies dépasse un niveau prédéterminé, on diagnostique alors une défaillance du filtre, pouvant être une fissuration, du filtre. Selon l'application considérée, le niveau prédéterminé est compris entre 100°C et 200°C, et généralement entre 140°C et 160°C, ou de l'ordre de 150°C.

L'exotherme ainsi évalué peut, dans une variante de l'invention, être en outre intégré par le calculateur moteur 7 sur une période glissante prédéterminée. L'intégrale ainsi calculée donne une idée de la sollicitation thermique du filtre à particules. Si cette intégrale dépasse une valeur prédéterminée, on diagnostique alors une défaillance du filtre, pouvant être une fissuration.

L'intégration de l'exotherme ainsi réalisée peut en outre permettre de corriger le niveau de charge estimé dans le filtre à particules 6, en prenant en compte la quantité de particules oxydées lors de la régénération incontrôlée.

Si la stratégie conclut qu'une dégradation du filtre s'est produite, le module OBD 8 du calculateur moteur 7 est alors averti. Conformément aux législations en vigueur et futures, l'information peut être consignée dans une mémoire du calculateur 7 ou du module OBD 8, et un dispositif lumineux de défaillance 9 avertit le conducteur de l'anomalie rencontrée.

Ainsi, dans le cadre d'une application automobile et conformément aux règlementations actuelles et à venir, qui imposent par exemple de surveiller l'efficacité de filtration du filtre sur 160 000 km dans le cadre de la norme européenne EURO 5, il devient possible d'alerter l'utilisateur qu'une régénération critique du filtre à particules, pilotée ou incontrôlée et éventuellement spontanément déclenchée par les conditions de roulage du véhicule, a été détectée et que ses performances peuvent être dégradées.

## Revendications

1. Procédé de surveillance d'un filtre à particules (6) équipant une ligne d'échappement d'un moteur à combustion (1) dans lequel on mesure la température en entrée du filtre (6) et la température en sortie du filtre (6), et dans lequel on calcule une température théorique en sortie du filtre en l'absence de combustion dans le filtre (6) par un modèle d'évaluation ayant pour entrée la température en entrée du filtre (6), le débit des gaz d'échappement, et des caractéristiques physiques du filtre à particules (6), on calcule la différence entre la température mesurée en sortie du filtre à particules (6) et la température théorique en sortie du filtre (6) on évalue par cette différence l'exotherme généré par l'oxydation des suies dans le filtre (6), **caractérisé en ce qu'**il est mis en oeuvre pendant toute la phase de fonctionnement du moteur (1), et notamment hors des phases de régénérations commandées du filtre (6).

2. Procédé selon la revendication 1, **caractérisé en ce qu'**il est en outre mis en oeuvre pendant une durée prédéterminée suite à l'arrêt du moteur à combustion (1).

3. Procédé selon la revendication 1 ou la revendication 2, caractérisé en ces les caractéristiques physiques du filtre (6) considérées comportent au moins l'un des paramètres suivants : le volume du filtre (6), sa forme, son inertie thermique, son matériau constitutif, le coefficient d'échange thermique entre le filtre (6) et son environnement.

4. Procédé selon l'une quelconque des revendications précédentes **caractérisé en ce que** dans le modèle d'évaluation de la température théorique en sortie du filtre :
• on mesure ou on estime la température en entrée du filtre (6),
• on mesure ou on estime le débit des gaz d'échappement,
• on évalue le retard d'évolution de la température entre l'entrée et la sortie du filtre (6) lié au temps de transport des gaz, en tenant compte du débit des gaz d'échappement,
• on calcule la température du filtre à particules (6) en tenant compte des caractéristiques physiques du filtre (6), et de leurs effets sur les échanges thermique par convection avec les gaz d'échappement et avec l'air extérieur,
• on calcule une température théorique en sortie du filtre (6) en l'absence de combustion dans le filtre à partir de la température mesurée ou estimée des gaz d'échappement en entrée du filtre à particules (6), des échanges thermiques par convection du filtre (6) avec les gaz d'échappement et avec l'air extérieur, et du retard d'évolution de la température estimé à partir du débit des gaz d'échappement.

5. Procédé selon l'une quelconque des revendications précédentes, dans lequel on utilise un modèle de calcul pour déterminer la charge en suies présente dans le filtre à particules (6), **caractérisé en ce qu'**on détermine la quantité de suies oxydée dans le filtre (6) grâce à l'exotherme évalué, et on corrige la charge en suies présente dans le filtre en y soustrayant la quantité de suies oxydée.

6. Procédé selon l'une quelconque des revendications précédentes, **caractérisé en ce qu'**on conclut à une défaillance du filtre à particules (6) si l'exotherme dans le filtre à particule dépasse un niveau prédéterminé.

7. Procédé selon la revendication 6, **caractérisé en ce que** le niveau prédéterminé de l'exotherme est compris entre 100°C et 200°C, et de préférence entre 140°C et 160°C.

8. Procédé selon l'une quelconque des revendications précédentes, **caractérisé en ce qu'**on intègre l'exotherme dans le filtre à particule sur une période glissante prédéfinie, et on conclut à une défaillance du filtre à particules (6) si l'intégrale de l'exotherme dépasse une valeur prédéterminée.

9. Procédé selon l'une quelconque des revendications 6 à 8, appliqué à un véhicule à moteur à combustion, comportant un filtre à particules dans la ligne d'échappement de son moteur, et comportant en outre un module « on board diagnostic » (OBD) (8), **caractérisé en ce qu'**on consigne dans ledit module (8) une information de défaillance du filtre à particules (6) si on détecte une défaillance du filtre à particules (6).

10. Procédé selon l'une quelconque des revendications 6 à 9, appliqué à un véhicule comportant en outre un dispositif d'alerte lumineux (9) d'anomalie du filtre à particule (6), **caractérisée en ce qu'**on commande ledit dispositif lumineux (9) si on détecte une défaillance du filtre à particules (6).

## Claims

1. Method for monitoring a particle filter (6) equipping an exhaust line of an internal combustion engine (1), in which the temperature at the inlet of the filter (6) and the temperature at the outlet of the filter (6) is measured, and in which a theoretical temperature is calculated at the outlet of the filter in the absence of combustion in the filter (6) by an evaluation model having as an input the inlet temperature of the filter (6), the flow rate of the exhaust gases, and physical characteristics of the particle filter (6), the difference is calculated between the measured temperature at the outlet of the particle filter (6) and the theoretical temperature at the outlet of the filter (6), by this difference the exotherm generated by the oxidation of the soots in the filter (6) is evaluated, **characterized in that** it is implemented during the entire functioning phase of the engine (1), and in particular outside of the phases of controlled regenerations of the filter (6).

2. Method according to Claim 1, **characterized in that** it is implemented furthermore for a predetermined duration following the stopping of the internal combustion engine (1).

3. Method according to Claim 1 or Claim 2, **characterized in that** the physical characteristics under consideration of the filter (6) comprise at least one of the following parameters: the volume of the filter (6), its shape, its thermal inertia, is constitutive material, the coefficient of thermal exchange between the filter (6) and its environment.

4. Method according to any one of the preceding claims, **characterized in that** in the evaluation model of the theoretical temperature at the outlet of the filter:
• the temperature at the inlet of the filter (6) is measured or estimated,
• the flow rate of the exhaust gases is measured or estimated,
• the development delay of the temperature between the inlet and the outlet of the filter (6), linked to the transport time of the gases, is evaluated taking into account the flow rate of the exhaust gases,
• the temperature of the particle filter (6) is calculated, taking into account the physical characteristics of the filter (6), and their effects on the thermal exchanges by convection with the exhaust gases and with the exterior air,
• a theoretical temperature is calculated at the outlet of the filter (6) in the absence of combustion in the filter from the measured or estimated temperature of the exhaust gases at the inlet of the particle filter (6), thermal exchanges by convection of the filter (6) with the exhaust gases and with the exterior air, and of the development delay of the temperature estimated from the flow rate of the exhaust gases.

5. Method according to any one of the preceding claims, in which a calculation model is used to determine the charge of soots present in the particle filter (6), **characterized in that** the quantity of soots is determined which is oxidized in the filter (6) owing to the evaluated exotherm, and the charge of soots present in the filter is corrected by subtracting there the oxidized quantity of soots.

6. Method according to any one of the preceding claims, **characterized in that** a failure of the particle filter (6) is inferred if the exotherm in the particle filter exceeds a predetermined level.

7. Method according to Claim 6, **characterized in that** the predetermined level of the exotherm is comprised between 100 °C and 200 °C, and preferably between 140 °C and 160 °C.

8. Method according to any one of the preceding claims, **characterized in that** the exotherm is integrated in the particle filter over a predefined sliding period, and a failure of the particle filter (6) is inferred if the integral of the exotherm exceeds a predetermined value.

9. Method according to any one of Claims 6 to 8, applied to a vehicle having an internal combustion engine, comprising a particle filter in the exhaust line of its engine, and further comprising an "on board diagnostic" module (OBD) (8), **characterized in that** a failure notice of the particle filter (6) is recorded in the said module (8) if a failure of the particle filter (6) is detected.

10. Method according to any one of Claims 6 to 9, applied to a vehicle further comprising a warning light device (9) of an anomaly of the particle filter (6), **characterized in that** the said light device (9) is actuated if a failure of the particle filter (6) is detected.

## Patentansprüche

1. Verfahren zum Überwachen eines Partikelfilters (6), das eine Auspufflinie eines Verbrennungsmotors (1) ausstattet, bei dem man die Temperatur am Eingang des Filters (6) und die Temperatur am Ausgang des Filters (6) misst, und bei dem man eine theoretische Temperatur am Ausgang des Filters bei Abwesenheit von Verbrennung in dem Filter (6) durch ein Bewertungsmodell, das als Eingabe die Temperatur am Eingang des Filters (6), den Durchsatz der Abgase und die physikalischen Merkmale des Partikelfilters (6) hat, berechnet, indem man den Unterschied zwischen der am Ausgang des Partikelfilters (6) gemessenen Temperatur und der theoretischen Temperatur am Ausgang des Filters (6) berechnet, man diesen exothermen Unterschied, der durch die Oxidation des Russes in dem Filter (6) erzeugt wird, bewertet, **dadurch gekennzeichnet, dass** es während der ganzen Betriebszeit des Motors (1) umgesetzt wird und insbesondere außerhalb der gesteuerten Regenerierungsphasen des Filters (6).

2. Verfahren nach Anspruch 1, **dadurch gekennzeichnet, dass** es ferner während einer vorbestimmten Dauer im Anschluss an den Stillstand des Verbrennungsmotors (1) umgesetzt wird.

3. Verfahren nach Anspruch 1 oder 2, **dadurch gekennzeichnet, dass** die betreffenden physikalischen Merkmale des Filters (6) mindestens einen der folgenden Parameter aufweisen: das Volumen des Filters (6), seine Form, seine Wärmeträgheit, seinen Herstellungswerkstoff, den Wärmeaustauschkoeffizienten zwischen dem Filter (6) und seiner Umgebung.

4. Verfahren nach einem der vorhergehenden Ansprüche, **dadurch gekennzeichnet, dass** man in dem Bewertungsmodell der theoretischen Temperatur am Ausgang des Filters:
• die Temperatur am Eingang des Filters (6) misst oder schätzt,
• den Durchsatz der Abgase misst oder schätzt,
• die Verzögerung der Temperatur zwischen dem Eingang und dem Ausgang des Filters (6) verbunden mit der Transportzeit der Gase unter Berücksichtigung des Durchsatzes der Abgase bewertet,
• man die Temperatur des Partikelfilters (6) unter Berücksichtigung der physikalischen Merkmale des Filters (6) und ihrer Auswirkungen auf die Wärmeaustausche durch Konvektion mit den Abgasen und mit der Außenluft berechnet,
• man eine theoretische Temperatur am Ausgang des Filters (6) bei Abwesenheit von Verbrennung in dem Filter ausgehend von der gemessenen oder geschätzten Temperatur der Abgase am Eingang des Partikelfilters (6), der Wärmeaustausche durch Konvektion des Filters (6) mit den Abgasen und mit der Außenluft und der Entwicklungsverzögerung der Temperatur geschätzt ausgehend von dem Durchsatz der Abgase berechnet.

5. Verfahren nach einem der vorhergehenden Ansprüche, bei dem man ein Rechenmodell verwendet, um die Russcharge, die in dem Partikelfilters (6) vorhanden ist, zu bestimmen, **dadurch gekennzeichnet, dass** man die Menge an oxidiertem Russ in dem Filter (6) dank des geschätzten Exotherms bestimmt und man die Russcharge, die in dem Filter vorhanden ist, korrigiert, indem man davon die Menge an oxidiertem Russ abzieht.

6. Verfahren nach einem der vorhergehenden Ansprüche, **dadurch gekennzeichnet, dass** man auf ein Versagen des Partikelfilters (6) schließt, wenn der Exotherm in dem Partikelfilter ein vorbestimmtes Niveau überschreitet.

7. Verfahren nach Anspruch 6, **dadurch gekennzeichnet, dass** das vorbestimmte Niveau des Exotherms zwischen 100 °C und 200 °C, vorzugsweise zwischen 140 °C und 160 °C liegt.

8. Verfahren nach einem der vorhergehenden Ansprüche, **dadurch gekennzeichnet, dass** man den Exotherm in dem Partikelfilter auf einer vordefinierten gleitenden Periode integriert und dass man auf ein Versagen des Partikelfilters (6) schließt, wenn das Integral des Exotherms einen vorbestimmten Wert überschreitet.

9. Verfahren nach einem der Ansprüche 6 bis 8, angewandt an ein Fahrzeug mit Verbrennungsmotor, das in der Auspufflinie seines Motors ein Partikelfilter aufweist und ferner ein "On Board Diagnostic"-Modul (OBVD) (8) aufweist, **dadurch gekennzeichnet, dass** man in dem Modul (8) eine Versagensinformation des Partikelfilters (6) festschreibt, wenn man ein Versagen des Partikelfilters (6) erfasst.

10. Verfahren nach einem der Ansprüche 6 bis 9, angewandt an ein Fahrzeug, das ferner eine Leuchtwarnvorrichtung (9) für eine Anomalie des Partikelfilters (6) aufweist, **dadurch gekennzeichnet, dass** man die Leuchtvorrichtung (9) ansteuert, wenn man ein Versagen des Partikelfilters (6) erfasst.
